# EUROPEAN PATENT APPLICATION

(11) **EP 2 520 874 A1**
(43) Date of publication of application: **07.11.2012**
(21) Application number: 10840617.4
(22) Date of filing: 29.12.2010
(51) Int. Cl.: F24J 2/10, G02B 5/10

(54) **PARAMETRIC CYLINDRICAL SOLAR COLLECTOR HAVING AN OPTIMISED SECONDARY RECONCENTRATOR AND METHOD FOR DESIGNING SAME**

(30) Priority: 30.12.2009 ES 200902422
(71) Applicant: Abengoa Solar New Technologies, S.A., 41018 Sevilla (ES)
(72) Inventor: NUÑEZ BOOTELLO, Juan Pablo, E-41014 - Sevilla (ES)
(74) Representative: Garcia-Cabrerizo y del Santo, Pedro Maria
(86) International application number: PCT/ES2010/000529
(87) International publication number: WO 2011/080365

(57) **Abstract**

Parametric cylindrical solar collector with an optimized secondary reconcentrator and its design process, where the geometry of the primary reflector is an evolution of the Helmet collector concept towards a discontinuous curve that allows increasing the C/Cmax concentration to over 0.52 as well as reducing the wind loads. The structure is optimized to withstand the different loads to which the collector is exposed. The collector's center of gravity is brought closer to the axis of rotation of the collector. The geometry of the secondary reconcentrator is optimized and the collection efficiency of the collector is of 100 %. The secondary reconcentrator is obtained partially mirroring the glass tube that keeps the vacuum in the absorber tube. (Figure 3)

## Description

### Technical industry of the invention

The invention is framed within the technical industry of the thermo solar technology, more precisely in the systems of cylindrical type linear concentrators.

### Background of the invention

The general principle of thermo solar technology is based on the concept of concentration of the solar radiation to heat a liquid capable of transferring heat and generating electricity.

The collection of solar energy and its concentration is one of the biggest challenges in the development of thermo solar plants. There are primarily two types of technologies in concentrators: point concentration and linear concentration. The linear type is easier to install as it has fewer degrees of freedom, but it has a lower concentration factor and may therefore reach lower temperatures than the point concentration technology.

Among the point concentrators there is a distinction between the parabolic dish concentrators and the tower centrals. Within the lineal technology, the Parabolic Cylinder Concentrator (PCC) is the most mature concentration system and there are now some Fresnel-type Linear Collectors (FLC) arising.

The Fresnel collectors are composed of a primary and a secondary system. The primary is formed by a series of parallel lines of reflecting mirrors, flat or slightly curved, with mobile structures which are the ones in charge of emitting and orienting the solar radiation towards the secondary one. The radiation reaches the secondary system's opening and is redirected by some mirrors to an imaginary focal "tube" which is where the absorber tube is placed.

This secondary system is elevated over the field of mirrors by several meters and is in charge of re-concentrating the solar radiation that is emitted by the primary system as well as of directing it towards an absorber tube.

The parabolic cylinder technology is a more mature technology with an extensive history which proves that it is ready to be installed on a large scale. This technology has been installed commercially since the 1980s with an exceptional behaviour. Since then, it has experienced significant improvements at the cost and performance levels. Currently, there are 300 MWs in operation, 400 in construction and about 6 GWs in promotion globally.

The parabolic cylinder technology's operation is based on solar tracking and in the concentration of the solar rays into some receptor tubes with a high thermal efficiency located in the focal line of the parabolic cylinder collectors. In these tubes, a heat-transmitting fluid, such as synthetic oil, is heated to approximately 400 °C by the concentrated solar rays. This oil is pumped through a series of heat exchangers to produce overheated vapour. The heat that is present in this vapour is converted into electric energy through a conventional vapour turbine and an alternator.

The main components of the solar field in the parabolic cylinder technology are:
- A parabolic cylinder reflector: The parabolic cylinder reflector's mission is to reflect and concentrate the direct solar radiation that impacts over surface to an absorber tube. The mirror surface is attained with films of silver or aluminium placed over a support that provides it with sufficient rigidity. Currently, the most often used support means are metal sheet, glass and plastic. It is known as the primary reflector.
- The absorber tube: Generally, the absorber tube features two concentric tubes separated by a vacuum layer. The interior, through which the heated fluid circulates, is made of metal, and the exterior is made of glass. The working fluid is different depending on the technology. For low temperatures (< 200 °C) demineralised water is commonly used with Ethylene-Glycol while for higher temperatures (200 °C < T < 450 °C) synthetic oil is used. The latest technologies allow the direct generation of vapour by placing high pressure on the tubes or also with the use of salts as heat transferring fluid.
- The solar tracking system: The most common tracking system consists of a device that rotates the collector's parabolic cylinder reflectors around a longitudinal axis, in a way that the rays are always perpendicular to this axis and parallel to the dish's optical axis.
- The metal structure: The mission of the collector's structure is to provide rigidity to the set of elements constituting it.

In the case of the current parabolic cylinder collector all of the rays that reach the dish within the design's angle of impact are reflected on the absorber tube. The collection efficiency of this concentrator, defined as the fraction of power impacting within the acceptance angle of the primary which reaches the absorber tube is of 100 %. It is possible to check that the current parabolic cylinder collector's concentration is around 26 suns while the second principle of thermo dynamics allows to firmly state that it is possible to reach 83 suns. That is to say that, theoretically, the concentration of the current collector could still be increased 3.19 times keeping the same angle of acceptance.

Throughout recent history there have been different attempts to increase the concentration of the parabolic cylinder collectors through the use of secondary reconcentrators. It has been demonstrated from among them that it is possible to reach the maximum concentration with 100 % collection efficiency with the CPC (Compound Parabolic Concentrator) type concentrator for a tubular receptor. However, from a practical point of view, this reconcentrator presents some important disadvantages which penalize its use. In some cases, the secondary, together with the absorber tube must be moved away from the primary dish; in others there are secondary geometries generated which are complex and difficult to manufacture. The most important disadvantage is, however, that the reconcentrator must be kept in contact or very close to the absorber tube which forces the designers to locate the reconcentrator inside the glass tube keeping the vacuum or implement solutions without vacuum and without a glass tube, which are concepts that have already been tried in some Fresnel type concentrators. Something similar would occur with TERC (Tailored Edge Ray Concentrator) reconcentrators.

The use of CPC or TERC type reconcentrators is, therefore, more justifiable from the point of view of Fresnel collectors in which the secondary remains static and mechanically detached to the primary, in which it is possible to go to greater separations between the primary and the secondary and/or in which it is possible to thermally isolate the set without the use of vacuum and using, in part, the secondary reconcentrator itself. Other advantages traditionally brandished in favour of the Fresnel collector are that this type of collectors allow to reduce the structure cost, among others, due to a reduction in the loads of wind that act over the primary mirrors after a discretisation of the primary in shorter sections and that the solar radiation reached the tube in its entire perimeter reducing the thermal stress to which it is exposed.

Returning to the parabolic cylinder collectors, another advantage which implies the nearest background of the invention claimed, is a publication (Benitez et al., 1997) in which two new types of solar concentrators for tubular receptors are presented, known as "Snail concentrator" and "Helmet concentrator", whose main characteristic is that there is a space or gap between the secondary reconcentrator and the absorber tube, which allows to take advantage of the glass tube to mirror part of the interior perimeter and to generate the secondary reconcentrator. One of the differences between the Snail collector (so called because of the snail shape of the secondary reconcentrator) and the Helmet collector (so called because of the helmet shape of the secondary reconcentrator) is that the latter is symmetrical (like conventional parabolic concentrators) while the former is not.

The differentiating and innovative fact of these designs is that the primary reflector is no longer forced to have a parabolic geometry; but the method is not described (at least the inventors have not found it) to design a new geometry and make it more efficient.

In this sense, Benitez et alters document in their article "Contactless two-stage concentrators for a tubular absorber" that with the Helmet type collector it is possible to reach a C/Cmax of around 72.8 % for an acceptance of the primary of ± 0.73 °, a separation between the secondary and the absorber tube 12.1 times the radius of the absorber tube, an opening half angle of ± 86.2 °, a collection efficiency of 96.8 % and an average number of reflections on the secondary of around 0.40.

With the experience gathered in the construction of parabolic cylinder collector plants it is possible to document that the structure is the element that carries the most weight from the point of view of collector costs.

One disadvantage in the Helmet collector concept is that, if we do not reduce the diameter of the absorber tube - which is necessary to keep the losses in load under control from the process point of view - the previously mentioned increase in the concentration with respect to the current collector entails an increase in the primary's opening. If the primary reflector begins to gain in opening the expense in the collector's structure is penalized, since the wind loads would become so large that the economic optimal would indicate the need to move to a solution with a discretised primary or Fresnel type. Furthermore, in the above conditions, the Helmet concept, even having half angles of opening similar to the current ones, would imply to increase the current separation between the absorber tube and the primary reflector, which would, for the second time, penalize the collector's structure.

Thus, this invention is centered on the development of a parametric cylindrical collector, which starting from the Helmet concept it evolves it, optimizing the geometry of the primary reflector, moving away from the current conventional parabolic geometry, but keeping the structural requirement and with a cost similar or lower than the current one.

### Description of the invention

This invention refers to a linear concentrator, which will be called hereinafter, parametric cylinder concentrator and which features an optimized secondary reconcentrator.

It is an innovative and symmetrical solar collector formed by a primary mirror with an optically optimized geometry to maximize total concentration, a secondary reconcentrator and an absorber tube.

The primary reflector's geometry is a discontinuous curve which allows to increase the concentration C/Cmax to over 0.52 - 65 % higher than currently - as well as to reduce the wind loads. The structure is optimized to withstand the loads to which the collector is subjected and, the collector's center of gravity is located very near the rotation axis of the collector itself.

The secondary reconcentrator's geometry is optimized and the collection efficiency of the collector is 100 %. The average number of reflections in the secondary is minimized and lower than 0.15.

The collector's design process is described step by step in the detailed preferred embodiment of the invention.

The primary reflector is discontinuous and it is constituted by two or more sections - two of them are parametric and symmetrical and the other section is parabolic with one or several sections, located centrally between the previous parametric sections, - and with a half angle opening similar to that of the current parabolic cylinder collector. The discontinuity generates a small loss in net concentration of 1 or 2 percentage points unlike the case where there is no discontinuity and which will be larger the closer the parabolic section gets to the absorber tube. In return, the collection efficiency of the collector is kept at 100 %, the average distance of the primary reflector's points to the center of the absorber tube is reduced by 15 % with respect to the case with no discontinuity present and the average number of reflections at the secondary is minimized.

The central body of the collector's structure is embedded in said discontinuity which allows bringing the absorber tube closer to the structure, reducing the wind loads and bringing the collector's center of gravity closer to the rotation axis of the collector itself. Eventually, the double reflection effect may be counteracted due to an increase in acceptance in the collector's design sacrificing some of the gained in opening.

The parabolic section may be divided, if deemed necessary in several sections creating a higher number of discontinuities.

The secondary reconcentrator is manufactured mirroring a part of the glass tube which keeps the vacuum of the absorber tube and ensures that all of the rays reach the vacuum tube.

The vacuum tube comprises an interior tube with either a circular or non circular shape, generally made of steel, and with a selective absorber coating that maximizes the absorption of the solar light and minimizes its emissivity due to temperature, and by a partially mirrored glass tube with either a circular or non circular geometry and optically optimized in order to increase the concentration of the solar light in the steel tube. The glass tube's non mirrored part will have an antireflection coating to optimize the absorption of solar light. The receptor tube as a whole will have a double function: it will function as a receptor tube and as a secondary reconcentrator. Both tubes that form it could be coaxially or not and there could be vacuum between them or not. The interior tube will be sized to accept any range of operation pressure, will be made of metal materials, or alloys, cermets, or materials with functional graduated FGMs properties, or others in a way that the heat transferring fluid that circulates inside the tube may be any: oil, water, CO2, salts, ionic liquids or others.

Therefore, the proposed concept encompasses the advantages of the quintessential two linear collectors which are:
- a high optical efficiency throughout the solar day,
- the increase in opening of the primary reflector and of the concentration,
- the reduction of the wind loads and the cost of the collector's structure by m2 of opening,
- an improvement in the behaviour before thermal stress due to the fact that the absorber tube is illuminated throughout its perimeter,
- a reduction in the thermal losses of the collector not only due to an increase in the concentration but also because the absorber tube stops seeing the sky in its radiant exchange through its back section to see the secondary reconcentrator,
- and the possibility to increase the collectors working temperature and the efficiency of the power block with direct generation of vapour or with new heat transferring fluids.

### Description of the drawings

In order to complement the description, a set of drawings is attached wherein, with an illustrative non-limiting character, the following has been represented:
Figure 1. Snail Collector. State of the art
Figure 2. Helmet Collector. State of the art
Figure 3. Parametric cylinder concentrator of the invention
Figure 4. Improved absorber tube
Figure 5. Detail of the rays' tracing over the secondary reconcentrator

The elements cited in the references represent:
1. Primary reflector
2. Secondary reconcentrator
3. Receptor (glass tube + absorber tube)
4. Solar radiation
5. Optimized secondary reconcentrator
6. Absorber tube
6'. Glass tube
7. Central body of the structure
8. Parabolic section of the invention's primary reflector
9. Parametric sections of the invention's primary reflector
10. Mirrored zone

### Detailed embodiment of the invention

This invention relates to a parametric cylindrical solar concentrator with an optimized secondary reconcentrator.

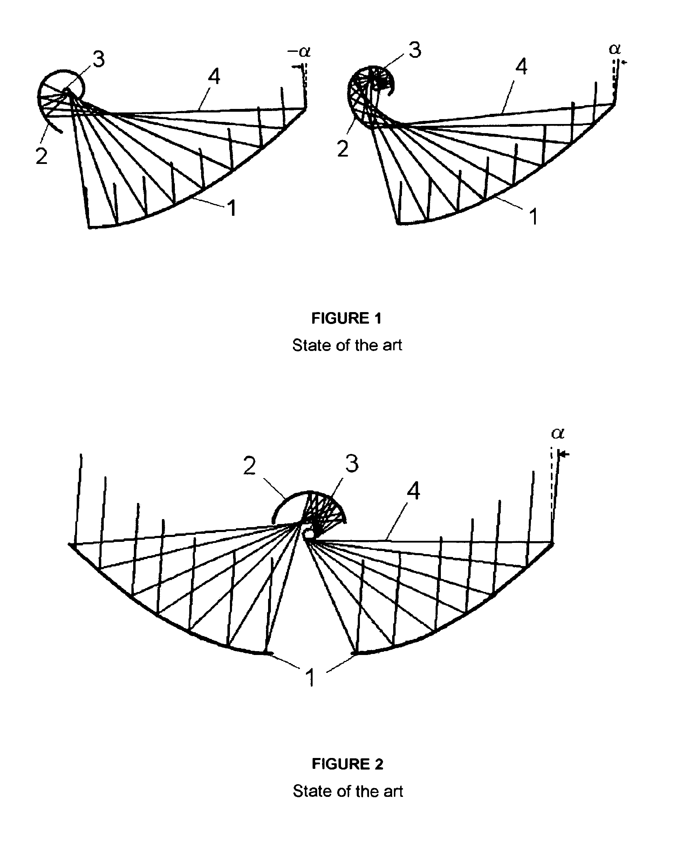

Figure 1 and figure 2 reflect the state of the art considered by the inventors as being the closest to the claimed invention. Figure 1 shows a Snail collector and figure 2 a Helmet collector. In both cases, the secondary (2) is located outside of the receptor (3) and above it. In the Snail concentrator (figure 1) it adopts a spiral geometry which causes the solar rays (4) to be rebounding towards the receptor (3). In the Helmet collector (figure 2) the primary reflector (1) is discontinuous and symmetrical, leaving an intermediate gap or free space where the secondary (2) is placed, although closer to the receptor (3) and also so that the rays (4) rebound on it.

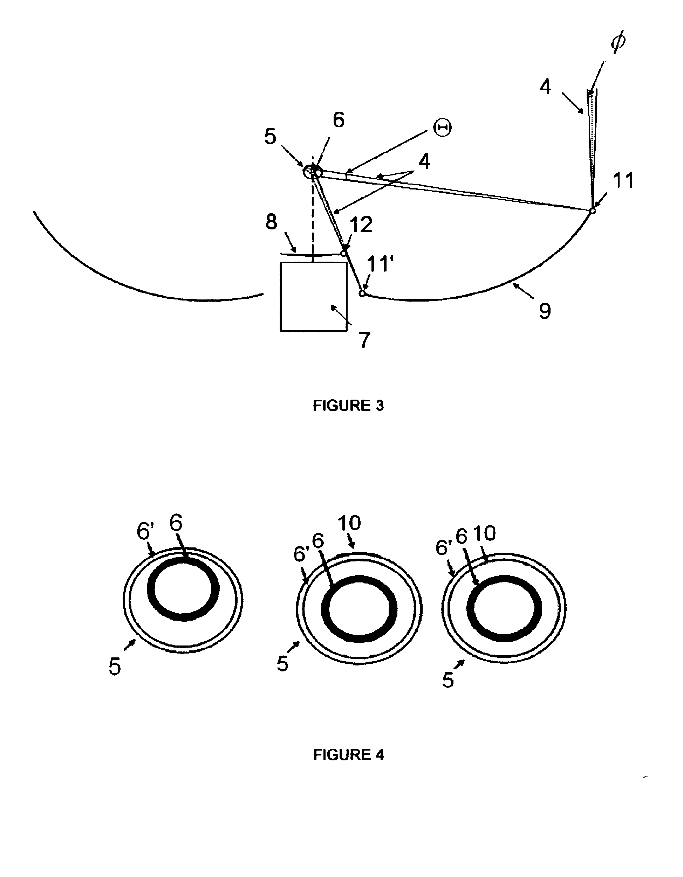

Figure 3 shows the collector of the invention. The primary reflector's geometry is of the discontinuous type, which implies the existence of one or several gaps or spaces and/or discontinuities along it. Said receptor is symmetrical and with a geometry that is not parabolic throughout its length.

Particularly, the geometry of the primary reflector of the invention features an initial parabolic section (8), closer to the absorber tube (6) and a second parametric section (9) divided into two symmetrical parts.

The design process of the collector is as follows (see figure 3):
- With φ being the half angle of acceptance of the radiation impacting the primary reflector (1), first the curve of the geometric location is drawn for the points from which it is possible to emit light confined in an opening angle θ equal to 2φ so that the edge rays of the aforementioned light beam (4) result tangent to the absorber tube (6), one of them without any reflection over the secondary reconcentrator (5) and the other after one sole reflection over said reconcentrator (5). The end point (11) of this curve, the complete geometry of the secondary reconcentrator (5), mirroring (10) and the relative position between the absorber tube (6) and glass tube (6'), are obtained imposing the condition of symmetry and forcing that, for the point in question (11), all of the intermediate rays (4) placed between the aforementioned end rays reach the absorber tube (6) after one or no reflections in the secondary reconcentrator (5).
- Secondly, the curve which, passing through the point (11) ensures that the impacting rays perpendicular to the wave front inclined to an angle φ with respect to the horizontal in a clockwise direction are reflected tangent to the absorber tube (6), is drawn. Both of the previous curves intersect at the points (11) and (11') and define the limits of the curve of the primary reflector's right parametric section (9). The left parametric lection of the primary reflector is symmetric to the latter.
   This way it is possible to define a geometry that allows for 100 % of the rays to impact the parametric curve, with an angle of incidence comprised within the acceptance of the design, to reflect reaching the absorber tube.
- The second section of the primary reflector's geometry is a parabolic section (8). Both end points (12) of the parabolic section (8) meet three conditions: they are symmetrical, they see the tube (6) with an acceptance equal to or higher than that of the design and they do not block the light beam reflected by point (11') and its symmetrical one. In these two points both discontinuities in the geometry of the primary are manifested.

The central body of the collector's structure (7) is embedded in said discontinuities which allow bringing the absorber tube (6) closer to the structure (7) reducing the wind loads and bringing the collector's center of gravity closer to the axis of rotation of the collector itself.

Even though in the preferred embodiment the parabolic section (8) is single, it could itself be divided in several sections creating a higher number of discontinuities.

The optimized secondary reconcentrator (5) is made mirroring part of the glass tube which keeps the vacuum of the absorbing tube and ensures that all of the rays reach the vacuum tube.

Figure 4 shows the receptor tube which comprises an inner tube (6) with a circular or non circular shape and with a special material and coating to maximize the absorption of solar light and minimize its emissivity due to temperature and a glass tube (6') partially mirrored (10) with a circular or non circular geometry and optically optimized in order to increase the concentration of the sun's light in the steel tube (6). In the non mirrored part of the glass tube (6') it will have an anti reflecting coating that optimizes the absorption of solar light. The receptor tube as a whole will have a double function: it will function as a receptor tube and as an optimized secondary reconcentrator (5). Both tubes (6, 6') that form it could be coaxial or not and there could be vacuum between them or not.

The inner tube (6') will be sized to accept any range of operation pressures, and its material should be one so that the heat transferring fluid that circulates inside the tube may be any: oil, water, CO2, salts, ionic liquids.

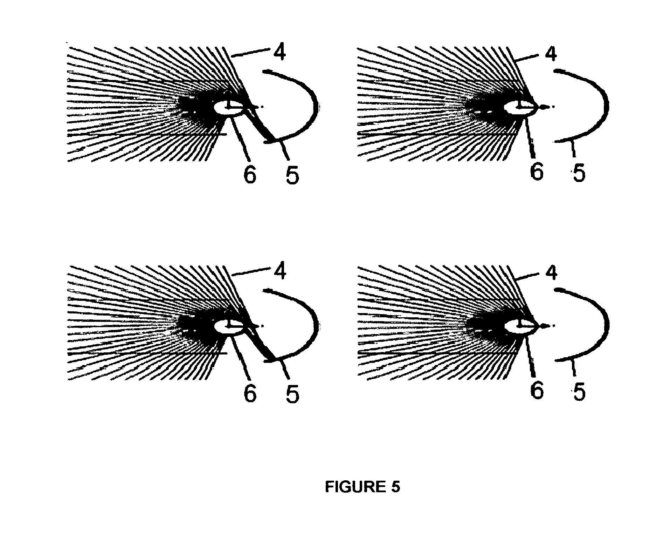

Figure 5 shows the drawing of different angles of incidence comprised within the primary's acceptance of design. The figure shows how the solar rays impact over the secondary reconcentrator to end up in the absorber tube.

This design of the solar receptor is specially conceived for linear collectors for thermo solar technology, but a possible application in other fields such as photovoltaic technology or applications for the generation of sanitary hot water or industrial heat is not ruled out by performing the necessary adaptations.

## Claims

1. Parametric cylindrical solar collector with an optimized secondary reconcentrator that is an evolution of the Helmet collector, formed by a primary symmetrical discontinuous reflector with a non parabolic geometry in its entirety, **characterized in that** the geometry of the primary reflector comprises at least two symmetrical sections with a parametric geometry (9), a parabolic section (8) centrally located between two parametric sections, with the parabolic section located closer to the absorber tube (6) than the symmetrical sections with a parametric geometry (9) and an optimized secondary (5) that functions as a receptor tube and as a secondary reconcentrator and which comprises an interior absorber tube (6) with a selective absorbing coating and an exterior glass tube (6') partially mirrored (10), with the mirrored part being placed either on the outside or on the inside of the glass tube.

2. Parametric cylindrical solar collector with an optimized secondary reconcentrator according to claim 1, **characterized in that** the central body of the collector's structure (7) is embedded in the discontinuity that is formed between the symmetrical sections of the primary reflector (9), with the collector's center of gravity being very close to the axis of rotation of the collector itself.

3. Parametric cylindrical solar collector with an optimized secondary reconcentrator according to claim 1 **characterized in that** the parabolic section (8) is divided into several independent sections.

4. Parametric cylindrical solar collector with an optimized secondary reconcentrator according to claim 1 **characterized in that** the non mirrored part of the glass tube (6') has an anti reflecting coating to optimize the absorption of solar light.

5. Parametric cylindrical solar collector with an optimized secondary reconcentrator according to claim 1 **characterized in that** the interior absorber tube (6) and the exterior glass tube (6') are not coaxial.

6. Parametric cylindrical solar collector with an optimized secondary reconcentrator according to claim 1 **characterized in that** the interior absorber tube (6) and the exterior glass tube (6') have a non circular geometry.

7. Design process of a parametric cylindrical solar collector such as the one described in the above claims which comprises the following stages:
- With φ being the half angle of acceptance of the radiation impacting the primary reflector (1) first the curve of the geometric location is drawn for the points from which it is possible to emit light confined in an opening angle θ equal to 2φ so that the end rays of the aforementioned light beam (4) are tangent to the absorber tube (6), one of them without any reflection over the secondary reconcentrator (5) and the other after a single reflection over the aforementioned reconcentrator (5); the end point (11) of this curve, the complete geometry of the secondary reconcentrator (5), mirrored (10) and the relative position between the absorber tube (6) and glass tube (6'), are obtained imposing the condition of symmetry and forcing that, for the point in question (11), all of the intermediate rays (4) placed between the aforementioned end rays reach the absorber tube (6) after one or no reflections in the secondary reconcentrator (5).
- Secondly, the curve which, passing through the point (11), ensures that the impacting rays perpendicular to the wave front inclined to an angle φ with respect to the horizontal in a clockwise direction are reflected tangent to the absorber tube (6), is drawn; both of the previous curves intersect at points (11) and (11') and define the limits of the curve of the primary reflector's right parametric section (9); the left parametric section of the primary reflector is symmetric to the latter.
- The second section of the primary reflector's geometry is a parabolic section (8); both end points (12) of the parabolic section (8) meet three conditions: they are symmetrical, they see the tube (6) with an acceptance equal to or higher than that of the design and they do not block the light beam reflected by point (11') and its symmetrical one. In these two points (12) both discontinuities in the geometry of the primary are manifested.
